# EUROPÄISCHE PATENTSCHRIFT

(11) **EP 2 319 651 B1**
(45) Veröffentlichungstag und Bekanntmachung des Hinweises auf die Patenterteilung: **09.01.2013**
(21) Anmeldenummer: 09174768.3
(22) Anmeldetag: 02.11.2009
(51) Int. Cl.: B23K 11/00, B23K 35/02, B23K 9/20, F16B 15/08, F16B 27/00, F16B 37/04, F16B 37/06

(54) **Schweissbarer Verbinder**
Weldable connector
Connecteur pouvant être soudé

(43) Veröffentlichungstag der Anmeldung: 11.05.2011
(73) Patentinhaber: Fabricius Fastener GmbH, 33100 Paderborn (DE)
(72) Erfinder: Fabricius, Jürgen, 33102 Paderborn (DE)
(74) Vertreter: Reimann, Silke

(56) Entgegenhaltungen:
- DE-C1- 19 648 873
- FR-A3- 2 871 202
- US-A1- 2003 127 346
- -: "Cups welded in place fast are attachments for fasteners" PRODUCT ENGINEERING, Bd. 41, Nr. 15, 20. Juli 1970 (1970-07-20) , Seiten 82-83, XP1600798

## Beschreibung

Die Erfindung betrifft einen Verbinder mit einem Profilkopf für die Verbindung von Hohlprofilen oder Bauelementen, die eine Nut aufweisen, auf Trägem, wobei der Profilkopf als ein durch Bolzenschweißen am Träger festlegbarer Klemmnippel ausgebildet ist, welcher einen, eine Schweißstirnseite bildenden unteren Kopfansatz hat, der über eine Unterkopfkalotte in einen oberen Kopfabschnitt mit einem größeren Querschnitt übergeht und an der Schweißstirnseite des Kopfansatzes eine Schweißspitze aufweist.

Klemmnippel sind in vielfältiger Form bekannt. Sie dienen zur lösbaren Verbindung von Hohlprofilen oder Bauelementen mit einem Träger. So werden im Fensterbau Glasleisten mittels Verbindern, die als Klemmnippel gestaltet sind, auf einem Trägerprofil aufgeklipst.

Herkömmliche Klemmnippel sind als Klemmnippelschrauben ausgebildet, die in Löcher in dem Trägerprofil eingeschraubt werden.

Wenn nun die Hohlprofile oder Bauelemente auf einen Träger aus Edelstahl aufgesetzt werden sollen, ist die Herstellung der Löcher in dem Edelstahlträger aufwendig.

Die Herstellung der Löcher kann vermieden werden, wenn die Klemmnippel mit einem Bolzenschweißgerät mit ihrer Schweißstirnseite auf den Träger aufgeschweißt werden. Um die Klemmnippel sauber aufschweißen zu können, ist diese Schweißstirnseite mit einer Schweißspitze ausgestattet.

Gattungsgemäße Verbinder, die als Klemmnippel ausgebildet sind, sind aus der
Patentschrift DE 196 48 873 C1 bekannt. Diese Verbinder sind aber nicht für den Einsatz in einem Bolzenschweißgerät optimiert. Hier kommt es auf eine möglichst großflächige Kontaktierung in einem Bolzenhalter an, um einen hohen Stromfluss gewährleisten zu können.

Der Kopf des Klemmnippels kann einen angeformten Zapfen aufweisen, der zur Halterung in einem Bolzenhalter und zur guten Kontaktgabe dient. Ein solcher Zapfen kann aber, wenn er lang ausgeführt ist, bei der Montage von Fenstern stören.

Aus dem Artikel "Cups welded in place are fast attachments for fasteners" in der Zeitschrift "Product Engeneering", Bd. 41 (1970), Nr. 15, Seiten 82-83, (XP-001600798) ist ein Verbinder mit einer tassenförmigen Vertiefung und einem zylindrischen Halterand sowie einem Schweißnippel bekannt, der auf Bauelementen aufgeschweißt werden kann. Die Stromkontaktgabe erfolgt über den Halterand, die Vertiefung ist nicht für die Kontaktgabe vorgesehen.

Es ist Aufgabe der Erfindung einen Verbinder und einen dazu passenden Bolzenhalter anzugeben, die für die Kontaktgabe in einem Bolzenschweißgerät optimiert sind.

Ein optimierter Verbinder ist mit den Merkmalen des Anspruchs 1 beschrieben.

Der dazu passende Bolzenhalter ist in Anspruch 7 angegeben.

Die Unteransprüche enthalten Gestaltungsmerkmale, die vorteilhafte Weiterbildungen der Erfindungsgegenstände darstellen.

Der erfindungsgemäße Verbinder für die Verbindung von Hohlprofilen oder Bauelementen, die eine Nut aufweisen, auf Trägern ist mit einem Profilkopf versehen, der einen, eine Schweißstirnseite bildenden unteren Kopfansatz hat, der über eine Unterkopfkalotte in einen oberen Kopfabschnitt mit einem größeren Querschnitt übergeht und an der Schweißstirnseite des Kopfansatzes eine Schweißspitze aufweist. In dem oberen Kopfabschnitt ist mindestens eine Vertiefung eingearbeitet, die eine Kontaktfläche bietet, über die ein hoher Schweißstrom von dem Bolzenhalter zu dem Verbinder fließen kann.

Der obere Kopfabschnitt des Verbinders ist vorteilhafterweise als zylindrisch geformter Bereich ausgeführt, an dem der Bolzenhalter angreifen kann und der auch als Kontaktfläche dient.

Dabei ist an den oberen Kopfabschnitt ein zusätzlicher Zapfen angeformt, der an seinem Umfang Flächen zur Halterung durch den Bolzenhalter und zur Kontaktgabe besitzt. Dieser Zapfen braucht nicht sehr lang zu sein, da durch die Vertiefungen in dem Kopf die Kontaktgabe gewährleistet ist. Somit ist der Verbinder auch im Fensterbau beim Einsetzen von Glasscheiben nur wenig hinderlich.

Die Vertiefung in dem oberen Kopfabschnitt ist vorzugsweise hohlzylindrisch ausgeführt. Dies bietet große Kontaktflächen und kann einfach hergestellt werden.

Die Schweißstirnseite des Kopfansatzes ist als Schweißkegel ausgebildet, der sich beim Bolzenschweißen mit dem Material des Trägers verbindet und damit eine einwandfreie Schweißung ergibt. Vorteilhafterweise ist dieser Schweißkegel in einem Winkel von etwa 3° ausgeführt.

Die Technik des Bolzenschweißens ist besonders für Verbinder aus Edelstahl geeignet, da es die aufwendigen Bohrarbeiten vermeidet.

Der Bolzenhalter für das Bolzenschweißgerät ist mit einem hohlen Haltezylinder versehen, der an seinem vorderen Ende für das Halten von Klemmnippeln mit vergrößerten Kontaktflächen ausgebildet ist. In dem Haltezylinder ist ein Bolzenstift geführt, der einstellbar tief in dem Haltezylinder befestigt ist, so dass er einen im Haltezylinder gehaltenen Klemmnippel flächig kontaktiert, wobei der Bolzenstift an seinem kontaktierenden Ende formschlüssig in die Vertiefung des Klemmnippels passt.

Je nach Ausführungsform des Verbinders greift der Bolzenhalter mit seinem vorderen Ende an dem zylindrisch geformten Bereich des oberen Kopfabschnittes oder an dem angeformten Zapfen an.

Dabei ist der Haltezylinder mehrfach längs geschlitzt und weist damit eine federnde Klemmwirkung auf. Diese wird noch durch ein um den Haltezylinder gelegtes federndes Element unterstützt, das als Gummiring ausgeführt sein kann.

Ausführungsformen der Erfindung sind beispielhaft in den Figuren dargestellt.
Fig. 1 zeigt einen Querschnitt durch einen Träger mit Klemmnippel und aufgesetztem Hohlprofil.
Fig. 2 zeigt einen Schnitt durch einen Verbinder und zugehörigen Bolzenhalter.
Fig. 3 zeigt einen Schnitt durch einen Verbinder mit Zapfen und zugehörigen Bolzenhalter.
Fig. 4 zeigt eine Draufsicht auf einen Bolzenhalter.

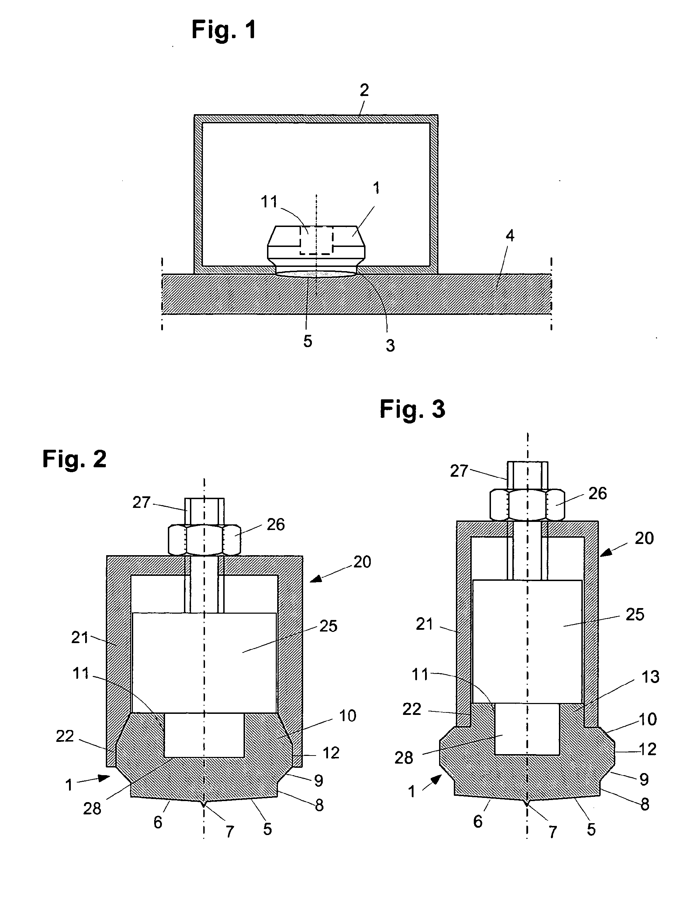

In Fig. 1 ist ein Träger 4 mit einem aufgeschweißten Verbinder 1, über den ein Hohlprofil 2 geklipst ist, dargestellt. Das Hohlprofil 2 liegt auf dem Träger 4 auf und wird mit seiner Nut 3 an dem Verbinder 1 gehalten.

Der Verbinder 1 ist seiner Schweißstirnseite 5 auf den Träger 4 aufgeschweißt.

In dem Kopf des Verbinders 2 ist die Vertiefung 11 eingebracht, die die Kontaktflächen für das Schweißen mit einem Bolzenschweißgerät bietet.

In den Fig. 2 und 3 sind jeweils ein Querschnitt durch einen Verbinder 1 mit dem zugehörigen Bolzenhalter 20 dargestellt.

Der Verbinder 1 ist als Klemmnippel ausgeführt. Auf seinem unteren Kopfansatz 8 sitzt die Unterkopfkalotte 9, die in den oberen Kopfabschnitt 10 übergeht. Dieser obere Kopfabschnitt 10 besitzt einen zylinderförmigen Kopfbereich 12.

An der Schweißstirnseite 5 ist der Schweißkegel 6 mit der Schweißspitze 7 ausgebildet. Der Verbinder 1 ist von dem Bolzenhalter 20 mit seinem Haltezylinder 21 und dessen Aufnahmebereich 22 gehalten. Dieser greift in der Ausführung gemäß Fig. 2 an dem zylinderförmigen Kopfbereich 12 an.

In der Ausführung gemäß Fig. 3 greift der Haltezylinder 21 an dem auf dem Verbinder 1 ausgeformten Zapfen 13 an.

In dem Haltezylinder 21 befindet sich der Bolzenstift 25, dessen vorderes kontaktierendes Ende 28 so ausgebildet ist, das es formschlüssig in die Vertiefung 11 des Verbinders 1 eintaucht. Die Lage des Endes 28 in dem Bolzenhalter 20 wird mittels der Einstellschraube 27 und der Einstellmutter 26 so justiert, dass sich ein flächiger elektrischer Kontakt über den Aufnahmebereich 22 und das kontaktierende Ende 28 des Bolzenstiftes 25 ergibt.

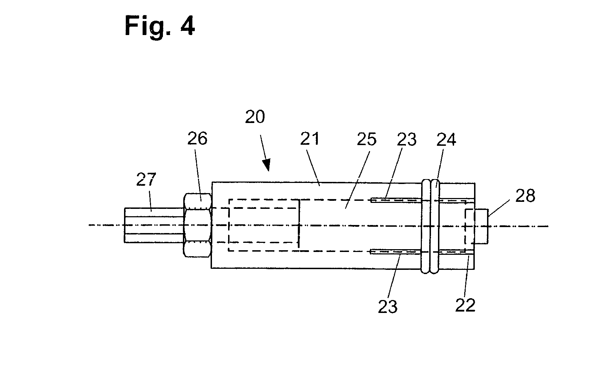

Fig. 4 zeigt eine Draufsicht auf den Bolzenhalter 20 mit seinem Haltezylinder 21 und dem Bolzenstift 25, der über die Einstellschraube 27 und die Einstellmutter 26 so justiert wird, dass das kontaktierende Ende 28 des Bolzenstiftes 25 formschlüssig in den hier nicht dargestellten Verbinder greifen kann.

Der Haltezylinder 21 besitzt die Längsschlitze 23, die den Aufnahmebereich 22 etwas federn lassen, damit der Verbinder dort sicher geklemmt wird. Diese Klemmung wird durch die Federn 24, die als Gummiringe ausgeführt sein können, unterstützt.

### Bezugszeichen

- 1: Klemmnippel
- 2: Hohlprofil
- 3: Nut
- 4: Träger
- 5: Schweißstirnseite
- 6: Schweißkegel
- 7: Schweißspitze
- 8: unterer Kopfansatz
- 9: Unterkopfkalotte
- 10: oberer Kopfabschnitt
- 11: Vertiefung
- 12: Zylinderförmiger Kopfbereich
- 13: Zapfen
- 20: Bolzenhalter
- 21: Haltezylinder
- 22: Aufnahmebereich
- 23: Schlitze
- 24: Feder
- 25: Bolzenstift
- 26: Einstellmutter
- 27: Einstellschraube
- 28: Kontaktierendes Ende des Bolzenstiftes

## Patentansprüche

1. Verbinder mit einem Profilkopf für die Verbindung von Hohlprofilen oder Bauelementen, die eine Nut aufweisen, auf Trägem, wobei der Profilkopf (1) als ein durch Bolzenschweißen am Träger (4) festlegbarer Klemmnippel ausgebildet ist, welcher einen, eine Schweißstirnseite (5) bildenden unteren Kopfansatz (8) hat, der über eine Unterkopfkalotte (9) in einen oberen Kopfabschnitt (10) mit einem größeren Querschnitt übergeht und an der Schweißstirnseite (5) des Kopfansatzes (8) eine Schweißspitze (7) aufweist, **dadurch gekennzeichnet, dass**
an dem oberen Kopfabschnitt (10) ein Zapfen (13) angeformt ist und in diesem mindestens eine Vertiefung (11) eingearbeitet ist.

2. Verbinder nach Anspruch 1, **dadurch gekennzeichnet, dass** der obere Kopfabschnitt (10) einen zylindrisch geformten Bereich (12) aufweist.

3. Verbinder nach Anspruch 1, **dadurch gekennzeichnet, dass**
die Vertiefung (11) eine hohlzylindrische Form besitzt.

4. Verbinder nach Anspruch 1, **dadurch gekennzeichnet, dass**
die Schweißstirnseite (5) des Kopfansatzes (8) als Schweißkegel (6) ausgebildet ist.

5. Verbinder nach Anspruch 4, **dadurch gekennzeichnet, dass**
der Schweißkegel (6) einen Winkel von etwa 3° aufweist.

6. Verbinder nach Anspruch 1, **dadurch gekennzeichnet, dass** er aus Edelstahl hergestellt ist.

7. Bolzenhalter für ein Bolzenschweißgerät mit einem hohlen Haltezylinder (21),
der mit einem Haltebereich (22) an seinem vorderen Ende für das Halten von Verbindern nach einem der vorstehenden Ansprüche ausgebildet ist, und einem in dem Haltezylinder geführten Bolzenstift (25), der einstellbar tief in dem Haltezylinder (21) befestigt ist, so dass er einen im Haltezylinder gehaltenen Verbinder (1) flächig kontaktiert, **dadurch gekennzeichnet, dass** der Bolzenstift (25) an seinem kontaktierenden Ende (28) so ausgebildet ist, dass es formschlüssig in die Vertiefung (11) des Verbinders (1) eintaucht.

8. Bolzenhalter nach Anspruch 7, **dadurch gekennzeichnet, dass**
der Haltebereich (22) an dem zylindrisch geformten Bereich (12) des oberen Kopfabschnittes (10) des Verbinders angreift.

9. Bolzenhalter nach Anspruch 7, **dadurch gekennzeichnet, dass**
der Haltebereich (22) an dem Zapfen (13) des Verbinders angreift.

10. Bolzenhalter nach Anspruch 7, **dadurch gekennzeichnet, dass**
der Haltezylinder (21) an seinem vorderen Ende mehrere Längsschlitze (23) aufweist.

11. Bolzenhalter nach Anspruch 10, **dadurch gekennzeichnet, dass**
der Haltezylinder (21) an seinem vorderen Ende durch ein federndes Element (24) zusammengedrückt ist.

## Claims

1. Connector with a profile head for the connection of hollow profiles or components which have a groove, with supports, wherein the profile head (1) is formed as a clamping nipple, which can be fixed on the support (4) by stud welding, having a lower head projection (8) forming a welding face (5), which merges via a calotte (9) into an upper head section (10) with a larger cross-section and having a welding tip (7) at the welding face (5) of the lower head projection (8), **characterized in that** a gudgeon (13) is formed on the upper head portion (10), which has at least one recess (11).

2. Connector according to claim 1, **characterized in that** the upper head section (10) has a cylindrical portion (12).

3. Connector according to claim 1, **characterized in that** the recess (11) has a hollow cylindrical shape.

4. Connector according to claim 1, **characterized in that** the welding face (5) of the lower head projection (8) is designed as a welding cone (6).

5. Connector according to claim 4, **characterized in that** the welding cone (6) has an angle of approximately 3 degrees.

6. Connector according to claim 1, **characterized in that** it is made of stainless steel.

7. Bolt holder for a stud welding device with a hollow holding cylinder (21) with an accommodation (22) formed at its front end for holding connectors according to one of the above claims, and with a bolt (25) guided in the holding cylinder, which is mounted at an adjustable depth in the holding cylinder (21) so that a surface-to-surface contact is established with the connector (1) held in the holding cylinder, **characterized in that** the contacting end (28) of the bolt (25) establishes a positive mechanical engagement in the recess (11) of the connector (1).

8. Bolt holder according to claim 7, **characterized in that** the accommodation (22) engages on the cylindrical portion (12) of the upper head section (10) of the connector.

9. Bolt holder according to claim 7, **characterized in that** the accommodation (22) engages on the gudgeon (13) of the connector.

10. Bolt holder according to claim 7, **characterized in that** the holding cylinder (21) has several longitudinal slots (23) at its forward end.

11. Bolt holder according to claim 10, **characterized in that** the holding cylinder (21) is compressed at its front end by a resilient element (24).

## Revendications

1. Connecteur avec une tête profilée pour la connexion de profilés creux ou des composants qui ont une rainure, sur des supports, dans lequel la tête de profil (1) est réalisé sous la forme d'un mamelon de serrage, qui peut être fixé sur le support (4) par soudage de goujons, comportant une saillie de tête inférieure (8) formant une face de soudage (5), qui se raccorde par l'intermédiaire d'une calotte (9) à une section de tête supérieure (10) avec une plus grande section transversale et comportant une pointe de soudage (7) sur la face de soudage (5) de la saillie de tête inférieure (8), **caractérisé en ce que**
un piston (13) est formé sur la partie supérieure de la tête (10), qui présente au moins un évidement (11).

2. Connecteur selon la revendication 1, **caractérisé en ce que** la section de tête supérieure (10) comporte une partie cylindrique (12).

3. Connecteur selon la revendication 1, **caractérisé en ce que** l'évidement (11) a une forme cylindrique creuse.

4. Connecteur selon la revendication 1, **caractérisé en ce que** la face de soudage (5) de la saillie de tête inférieure (8) est réalisé sous la forme d'un cône de soudage (6).

5. Connecteur selon la revendication 4, **caractérisé en ce que** le cône de soudage (6) forme un angle d'environ 3 degrés.

6. Connecteur selon la revendication 1, **caractérisé en ce qu'**il est réalisé en acier inoxydable.

7. Support de boulon pour un dispositif de soudage de goujons avec un cylindre de maintien creux (21) avec un logement (22) formé à son extrémité avant pour retenir les connecteurs selon l'une des revendications ci-dessus, et avec un boulon (25) guidé dans le cylindre de maintien , qui est monté à une profondeur réglable dans le cylindre de maintien (21) de sorte qu'un contact des surfaces est établie avec le connecteur (1) maintenu dans le cylindre de maintien, **caractérisé en ce que** l'extrémité de contact (28) du boulon (25) se trouve dans un accouplement mécanique dans l'évidement (11) du connecteur (1).

8. Support de boulon selon la revendication 7, **caractérisé en ce que** le logement (22) tient la partie cylindrique (12) de la section de tête supérieure (10) du connecteur.

9. Support de boulon selon la revendication 7, **caractérisé en ce que** le logement (22) tient le piston (13) du connecteur.

10. Support de boulon selon la revendication 7, **caractérisé en ce que** !e cylindre de maintien (21) présente plusieurs fentes longitudinales (23) à son extrémité avant.

11. Support de boulon selon la revendication 10, **caractérisé en ce que** le cylindre de maintien (21) est comprimé à son extrémité avant par un élément élastique (24).
